# NEUE EUROPÄISCHE PATENTSCHRIFT

(11) **EP 0 543 034 B2**
(45) Veröffentlichungstag und Bekanntmachung des Hinweises auf die Entscheidung über den Einspruch: **05.09.2001**
(45) Hinweis auf die Patenterteilung: 11.09.1996
(21) Anmeldenummer: 91119587.3
(22) Anmeldetag: 16.11.1991
(51) Int. Cl.: G05B 19/414

(54) **Verfahren zum Betrieb einer numerisch gesteuerten Werkzeugmaschine und Werkzeugmaschine zur Ausübung des Verfahrens**
Process for operation of numerical controlled machine tool and machine tool for implementation of the process
Procédé pour utilisation d'une machine-outil à commande numérique et machine-outil pour mettre en oeuvre le procédé

(43) Veröffentlichungstag der Anmeldung: 26.05.1993
(73) Patentinhaber: Tornos-Bechler SA, 2740 Moutier (CH)
(72) Erfinder: Currat, Jaques, CH-2740 Moutier (CH)
(74) Vertreter: Riebling, Peter, Dr.-Ing.

(56) Entgegenhaltungen:
- EP-A- 0 474 603
- EP-B- 0 270 059
- TECHNISCHE RUNDSCHAU Bd. 81, Nr. 48, Dezember 1989, BERN,CH Seiten 116 - 120; PETER SEPAN: 'CNC-System mit Drang nach Erweiterungen'
- FEINWERKTECHNIK & MESSTECHNIK Bd. 93, Nr. 6, September 1985, MüNCHEN ,DE Seiten 154 - 164; A. SIGNER: 'CNC und Automatisierung mit verteilter NC-Intelligenz,gesteuert durch Personalcomputer über ein Netzwerk'
- ELEKTROTECHNIK Bd. 72, Nr. 7/8, August 1990, WüRZBURG ,DE Seiten 24 - 26; ANDREAS ZAUCHINGER: 'Transputer macht `s möglich'

## Beschreibung

Ein Verfahren der eingangs genannten Art ist bei sogenannten NC-gesteuerten Werkzeugmaschinen bekannt.

Bei den bisher bekannten Verfahren ist es üblich, ein zentrales Maschinenprogramm zu verwenden, von dem aus die einzelnen Achsen angesteuert werden. Das heißt, es wird der entsprechende Programmsatz in den Kemspeicher geladen, interpretiert und ausgeführt. Dies hat jedoch den Nachteil, daß es relativ kompliziert und zeitaufwendig ist, weil man bei jedem Programmschritt eine neue Berechnung durchführen muß. Ein herkömmlicher Programmsatz besteht beispielsweise aus einer Anweisung, daß die X-Achse und die Y-Achse um einen bestimmten Vorschub vorgeschoben werden sollen. Ebenso ist darin die Bahngeschwindigkeit enthalten. In einem solchen Programmsatz, der bei jedem Schritt geladen wird, ist auch die Art der Ausführung enthalten, d.h. z. B. ein Bohrvorgang, ein Fräsvorgang, ein Drehvorgang oder dergleichen.

Damit besteht aber der Nachteil, daß bei jedem Programmsatz die X,Y und gegebenenfalls auch Z-Achse sowie die anderen Variablen jedes Mal neu berechnet werden müssen. Ebenso benötigt man die Rückführung der entsprechenden Signale an die Steuereinheit, die der Steuereinheit melden, daß der entsprechende Programmschritt abgearbeitet ist, oder alternativ, daß Fehler aufgetreten sind. z. B. Bahnabweichungen, die korrigiert werden müssen. Damit besteht also insgesamt beim Stand der Technik der Nachteil, daß die Abarbeitung eines derartigen Programmschrittes aufwendig und kompliziert ist.

Weiterer Nachteil ist, daß aufgrund dieser unterschiedlichen Programmschritte ein größerer Hard- und Softwareaufwand die Folge ist.

In dem Artikel von Peter Sepan "CNC-System mit Drang nach Erweiterung", technische Rundschau Bd. 81, Nr. 48, Dezember 1989, Bern, CH, Seiten 116-120 ist eine CNC-Steuerung für Werkzeugmaschinen beschrieben, wobei das Werkstück z. B. auf einem CAD-System entworfen wird und die CAD-Daten in geeigneter Form an das CNC-System übergeben werden. Diese Daten bestehen im einfachsten Fall aus einer Reihe von Punktefolgen, wobei daraus die Kurvenapproximation des herzustellenden Werkstücks durch Interpolation der Punktefolge in Echtzeit erfolgt.

Dieses System besitzt auch, wie oben beschrieben, den Nachteil, daß die Steuerung der Achsen in Echtzeit erfolgt, was einen erheblichen Datendurchsatz während der Bearbeitung des Werkstückes notwendig macht. Um diesem zu begegnen, werden hier zur Datenverarbeitung Multiprozessorsysteme eingesetzt, die für hohen Datendurchsatz ausgelegt sind.

EP 0 474 603 A1 bildet einen Stand eler Technik nach Artikel 54(3) und (4) EPÜ und offenbart eine Maschinensteuerung nach dem Oberbegriff des Patentanspruches 1, Sicht aber nicht vor, daß die vor der Bearbeitung berechneten und in Objektfiles abgelegten Wegbahnen vorwärts oder wahlweise rückwärts abgearbeitet werden. Mit der EP 0 270 059 A2 ist eine weitere Maschinensteuerung bekannt geworden, bei der jedoch keine zentrale Uhr vorhanden ist, die in beliebiger Geschwindigkeit vorwärts und rückwärts ablaufen kann.

Der vorliegenden Erfindung liegt deshalb die Aufgabe zugrunde, eine Werkzeugmaschinensteuerung der eingangs genannten Art wesentlich kostengünstiger und einfacher auszugestalten.

Die Lösung der gestellten Aufgabe erfolgt durch die technische Lehre des Anspruches 1.

Wesentliches Merkmal der vorliegenden Erfindung ist, daß die vorher erwähnten einzelnen Programmschritte nun nicht mehr in der Werkzeugmaschine selbst berechnet werden, sondern daß diese Programmschritte in einem externen Host-Rechner vor der Werkstückbearbeitung berechnet werden und dieser Host-Rechner in Abhängigkeit von diesen verschiedenen Programmschritten sogenannte Tabellen erstellt. Das heißt, es handelt sich hierbei um Zuordnungstabellen, bei denen pro Achse ein Zeitablauf vorgegeben wird, z. B. die Zeiten t1, t2,t3,t4 und t5, und in Abhängigkeit von diesen Zeitschritten werden die geforderten Positionen der X und Y-Achse und eventuell Z-Achse zu diesem Zeitpunkt berechnet und als Objektfile für jede einzelne anzusteuernde Achse gespeichert.

Die Erfindung ist jedoch nicht nur auf die Ansteuerung von Werkzeugachsen z. B. der X, Y und Z-Achse beschränkt, denn es gibt noch weitere Achsen an einer Werkzeugmaschine. Z. B. gibt es mehrere X und mehrere Y-Achsen und im übrigen gibt es über die X,Y, und Z-Achse hinaus noch weitere Achsen, z. B. die Achse einer eigenen Drehspindel, die getrennt angesteuert wird.

Das heißt also, die vorliegende Erfindung erstreckt sich auf beliebige Werkzeugachsen einer Werkzeugmaschine.

Wesentliches Merkmal der vorliegenden Erfindung ist nun, daß man auf eine intelligente Werkzeugmaschine verzichtet und stattdessen die von der Werkzeugmaschine vorher berechneten Daten von einem Host-Rechner berechnen läßt, der diese Daten in beliebiger digitaler Form der Werkzeugmaschine einspeichert.

Man verzichtet also auf die vorher bekannten, relativ teuren und aufwendigen Werkzeugmaschinen mit ihrer eigenen Intelligenz und verlagert diese Intelligenz auf einen Host-Rechner. Damit ist der Vorteil verbunden, daß der Host-Rechner nur einmal vorhanden sein muß, während der Host-Rechner mit seinen Daten eine Vielzahl von Werkzeugmaschinen versorgen kan.

Insgesamt wird damit ein wesentlich kostengünstigeres Datenaufbereitungskonzept gewährleistet, weil eben die Daten nur lediglich von einem einzigen Host-Rechner aufgearbeitet werden müssen.

Im Ergebnis arbeitet das Verfahren nach der vorliegenden Erfindung in der Art des bekannten Prinzips der Werkzeugmaschinen, die mechanisch von Kurvenscheiben gesteuert werden, die während der Abarbeitung mechanisch abgetastet werden. Auch bei derartigen Kurvenscheibenmaschinen wird die Wegbahn im voraus berechnet und abgespeichert (nämlich in Form der Kurvenscheibe) und das Abfahren (Abtasten) der Kurvenscheiben erfolgt synchron, nachdem bekannterweise alle Kurvenscheiben von einer einzigen Steuerwelle angetrieben werden.

Dieses mechanische Analogem wird nach der vorliegenden Erfindung durch die erfindungsgemässe Steuerung verwirklicht.

Im Prinzip werden nach der Lehre der Erfindung "Kurvenscheiben" für jede Werkzeugachse getrennt in numerischer Form gespeichert und nun nicht mehr - wie bekannt - von einer zentralen Steuerwelle gedreht - abgetastet, sondem nach der vorliegenden Erfindung von einem zentralen Zeittakt abgearbeitet.

Mit der Erfindung werden daher die Vorteile einer mechanischen Steuerung (Ausführungsgeschwindigkeit und Einfachheit der Anwendung) mit den Eigenschaften einer NC-Steuerung (Flexibilität, Möglichkeit zur Einbindung in ein komplexes CIM) verbunden.

Die in numerischer Form vorzugebende Befehlsstruktur nach der Erfindung muß folgenden Voraussetzungen genügen:
- es muß eine Maschine gesteuert werden, die sehr viele Achsenspindeln aufweist,
- die verschiedenen Achsen müssen völlig synchron angesteuert werden und
- es muß möglich sein, die Bewegungen einer Achse oder einer Gruppe von Achsen mit einer Spindel zu synchronisieren.

Die Achsebewegungen müssen in einer beliebigen Geschwindigkeit vorwärts oder rückwärts ausführbar sein.

Im Gegensatz zu herkömmlichen NC-Steuerungen errechnet die Steuerung nach der Erfindung keine Wegbahnen von Achsen, Hilfs- sowie Kontrollfunktionen des Programms in Echtzeit. Die vor der eigentlichen Werkstückbearbeitung für alle Achsen berechneten Wegbahnen werden in einen zentralen Rechner eingespeist, der dann die einzelnen Achsenkarten (Baugruppen jeder anzusteuernden Achse) ansteuert und das jeweilige Achsprogramm von einer zentralen Uhr gesteuert ausführt.

Nach einer Weiterbildung der Erfindung ist vorgesehen, daß auch die übrigen Maschinensteuerbefehle (Betriebsbefehle), insbesondere die Hilfs- und Kontrollfunktionen der Maschine, ebenfalls berechnet werden und einer speicherprogrammierbaren Steuerung eingegeben werden, welche die verschiedenen Hilfs- und Kontrollfunktionen der Werkzeugmaschine in Abhängigkeit von dem zentralen Uhrtakt steuert.

Vorteil der technischen Lehre ist, daß die Synchronisation der verschiedenen Achsenbewegung durch der zentralen Uhrtakt verwirklicht wird. Dieser zentrale Uhrtakt ist das Analogon zu der zentralen Steuerwelle einer vorher bekannten, mechanisch abgetasteten Kurvenscheibenanordnung. Ebenso wird die Synchronisation der Relativbewegungen zu einer rotierenden Spindel (z. B. zum Gewindeschneiden) durch einen anderen Uhrtakt verwirklicht, der durch die Umdrehung der Spindel synchronisiert wird.

Zur Erarbeitung der Programme zur getrennten Ansteuerung jeder Achse werden die Achsbewegungen von einem Standard-Werkstückprogramm in ISO-Code definiert. Ein Interpolator (Compiler), der mit einigen Zusatzfunktionen ausgestattet ist, berechnet den Verlauf der Bahn (Geschwindigkeit-Zeit) von jeder Achse und schreibt die Werte in ein Objektfile pro Achse. Hierbei ist es nach der vorliegenden Erfindung vorgesehen, daß die Funktion des Interpolators in der Programmier-Einheit angeordnet ist; in einer anderen Ausführungsform kann der Interpolator in der Zentraleinheit angeordnet werden; in einer dritten Ausführungsform kann der Interpolator in den den einzelnen, anzusteuernden Achsen zugeordneten Baugruppenkarten angeordnet werden.

Es wird also pro anzusteuernde Werkzeugachse oder pro anzusteuernde Spindel eine Tabelle erzeugt, deren Tabellenschritte in Abhängigkeit von der Zeit abgearbeitet werden. Pro Zeittakt ist somit vorgesehen, daß die bestimmte Werkzeugachse einen vorgegebenen Vorschubweg ausführt.

Alternativ kann statt der Vorschublänge auch die Zeit angegeben, weil ja diese beiden Größen unmittelbar miteinander verknüpft sind.

Ebenso ist es wichtig, daß die Tabelle nicht nur von oben nach unten abgearbeitet werden kann, sondern auch von unten nach oben.

Hierbei ist wesentlich, daß ein festgelegter Systemtakt zwar vorhanden ist, daß aber dieser Systemtakt noch veränderbar ist.

Die Geschwindigkeit ist also die Anzahl der Takte die man abwartet, um eine bestimmte Inkrementposition des Vorschubes zu fahren.

Die Inkremente sind immer gleich. Beispielsweise kann man eine Zuordnung derart treffen, daß einem Systemtakt eine Vorschublänge von 1 Mikrometer zugeordnet ist. Hierbei kann es dann vorgesehen sein, daß man, wenn man zwei Takte erhält, entsprechend 2 Mikrometer Vorschub erhält.

Alternativ ist es jedoch möglich, die Vorschubgeschwindigkeit zu verlangsamen und festzulegen, daß erst nach dem Eintreffen von zwei Systemtakten ein einziger Inkrementschritt vorgenommen wird. Das heißt also, die Taktung der verschiedenen Achsen ist nicht gleichbleibend, sondern kann in großen Grenzen variiert werden.

Kern der Erfindung ist also, daß die erfindungsgemäße Werkzeugmaschine im Verhältnis 1:1 Parameter einer Kurvensteuerung abbildet oder ausführt. Das heißt, die Steuerung der Werkzeugmaschine kennt nur eine Zuordnung eines bestimmten Systemtaktes zu einem bestimmten eg der entsprechenden Werkzeugachse. Damit besteht der Vorteil, daß die erfindungsgemäße Werkzeugmaschine kein Mensch-Maschine-Interface benötigt, d.h., kein Display und kein Terminal, was die Herstellungskosten wesentlich erniedrigt. Es genügt daher der Maschine eine einfache Displayanzeige, z. B. aus Leuchtdioden oder entsprechenden numerischen Anzeigen, zuzuordnen, und man benötigt keine aufwendigen Eingabevorrichtungen und Ausgabevorrichtungen mehr.

Im folgenden wird die Erfindung anhand von mehreren Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert ein vereinfachtes Blockbild der Steuerung der Werkzeugmaschine,
- Figur 2:: schematisiert das Blockschaltbild einer Baugruppe zur Ansteuerung einer Werkzeugachse,
- Figur 3:: ein gegenüber Figur 1 erweitertes Blockschaltbild,
- Figur 4:: ein gegenüber Figur 3 erweitertes Blockschaltbild der gleichen Steuerung,

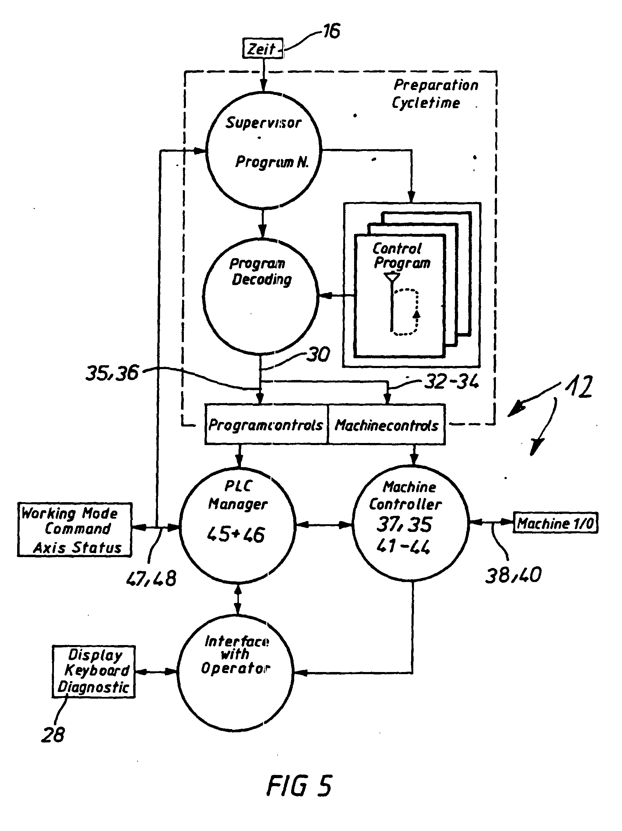

- Figur 5:: Funktionsschaltbild der speicherprogrammierbaren Steuerung,
- Figur 6:: Funktionsschaltbild zur Erzeugung des zentralen Uhrtaktes,
- Figur 7:: Funktionsschaltbild zur Ausführung der Achsensteuer-Tabelle,
- Figur 8:: ein Funktionsdiagramm zur Darstellung der Erzeugung von Objektprogrammen pro Achse aus einem entsprechenden Werkstück-Programm 51.

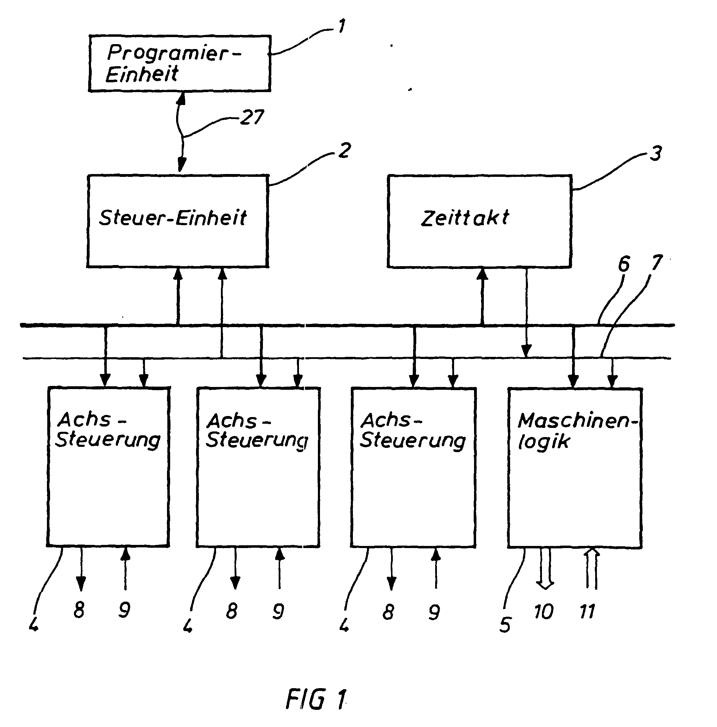

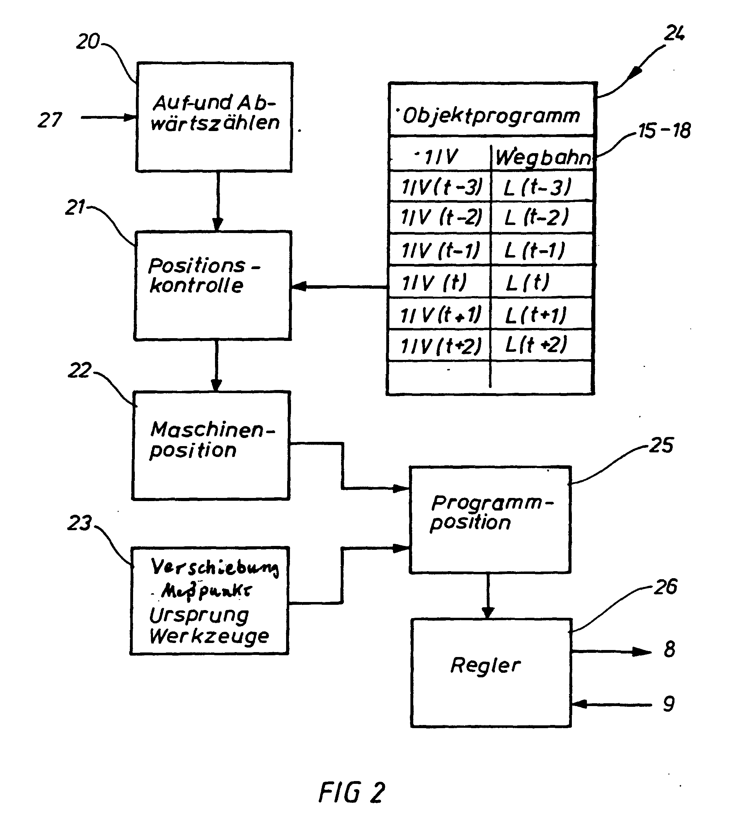

In vereinfachter Form ist in Figur 1 dargestellt, daß in einer externen Programm-Einheit die zur Bearbeitung des Werkstückes notwendigen Software-Programme vorhanden sind. Diese Programmier-Einheit kann hierbei eine Vielzahl von Werkzeugmaschinen mit entsprechenden Steuerbefehlen versorgen. Über die Verbindungsleitung 27 wird das Software-Programm einer zentralen Steuereinheit 2 zugeführt. Die zentrale Steuereinheit 2 ist in der nachfolgend zu beschreibenden Figur 2 näher erläutert.

In dieser Steuereinheit 2 werden die Software-Befehle der Programmier-Einheit 1 in Tabellenform umgesetzt, so daß unterschiedliche Objekt-Programme 24 (vergl. Figur 2) pro Achssteuerung 4 (Figur 1) erzeugt werden. Diese Objektprogramme werden über den Bus 6 den einzelnen Achssteuerungen 4 eingespeist. Die Abarbeitung der einzelnen Objektprogramme 24 erfolgt dann getrennt für jede Achssteuerung 1,2-N in Abhängigkeit von einem zentralen Zeittakt 3, so daß hierdurch eine absolut synchrone Abarbeitung aller Befehle in allen Achssteuerungen 1,2-N erreicht wird. Der Zeittakt 3 wird über den Bus 7 allen Achssteuerungen 4 eingespeist.

Ebenso wirkt die Steuereinheit 2 über den Bus 6 auf eine Maschinenlogik 5, die in einer bevorzugten Ausgestaltung der Erfindung als speicherprogrammierbare Steuerung ausgebildet ist. Diese Maschinenlogik dient zur Erzeugung der Hilfs- und Kontrollfunktionen in der Werkzeugmaschine. Über den Ausgangsbus 10 werden somit die einzelnen Hilfsfunktionen der Werkzeugmaschine gesteuert, und über den Eingangsbus 11 erfolgt die Rückmeldung der Maschinenfunktion an die Maschinenlogik 5.

In analoger Weise arbeitet jede Achssteuerung 1,2-N über den Ausgang 8 auf die entsprechenden Motoren zur Erzeugung der Vorschubbewegung, und über die Eingänge 9 erhält jede Achssteuerung 4 die entsprechende Rückmeldung von dem angesteuerten Achsmotor oder dem Spindelmotor.

Anhand der Figur 2 wird nun der Aufbau einer Achssteuerung 4 gemäss Figur 1 näher erläutert.

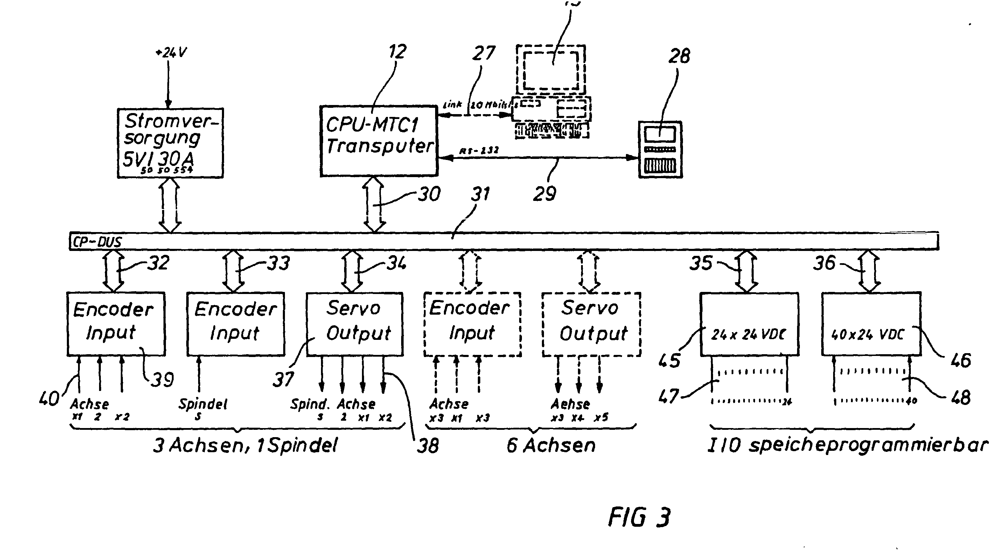

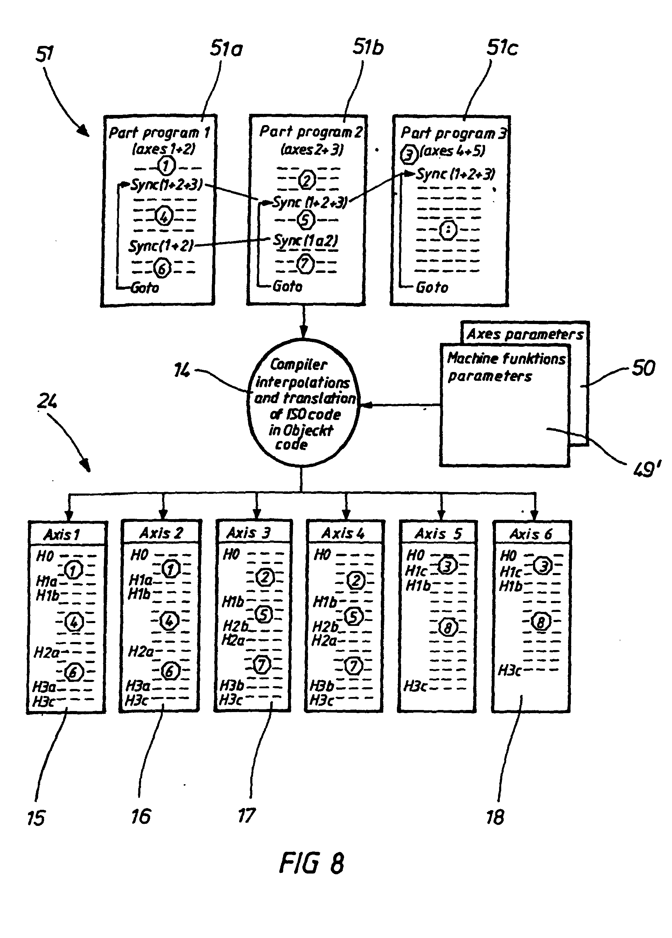

Gemäss der vorher gegebenen Erläuterung enthält die Steuer-Einheit 2,12 in der Konfiguration der Figur 3 in tabellenartiger Form Objektprogramme 24, wobei jeder Achssteuerung 4 ein eigenes, separates Objektprogramm zugeordnet ist. Diese Tatsache wird später noch anhand der Figur 8 näher erläutert werden.

Das Objektprogramm 24 besteht im wesentlichen aus einer Tabelle, in der der Geschwindigkeit V jeweils eine Wegbahn (Vorschublänge) der jeweils anzusteuernden Werkzeugachse zugeordnet ist. Unter der Kontrolle eines Auf- und Abwärtszählers 20 wird eine Positionskontrolle 21 von dem Objektprogramm 24 angesteuert. Der Zähler 20 taktet also die Positions-Kontrolle 21 und diese arbeitet schrittweise entsprechend dem Zeittakt die eingespeicherte Tabelle des Objektprogramms 24 ab.

Damit wird ein Wert der Maschinenposition 22 zu einem ganz bestimmten Zeitpunkt erzeugt.

Aus diesem errechneten Wert der Maschinenposition 22 wird ein weiterer Wert berechnet (Programm Position 25), bei dessen Berechnung die verschiedenen Verschiebungen 23 (Nullpunkt, Werkzeug) mit einbezogen wird.
Der Regler 26 vergleicht die Abweichung zwischen der errechneten Programmposition 25 und der aktuellen Achsposition und erzeugt so ein entsprechendes Ansteuersignal über den Ausgang 8 für die Achssteuerung. Die aktuelle Achsposition ist über den Eingang 9 erfasst.

Vorstehend wurde das einfache Prinzip zur Ansteuerung einer Achse erläutert, wobei wichtig ist, daß ein tabellenartig vorhandenes Objektprogramm unter Einwirkung eines Zeittakes den Achsvorschub steuert.

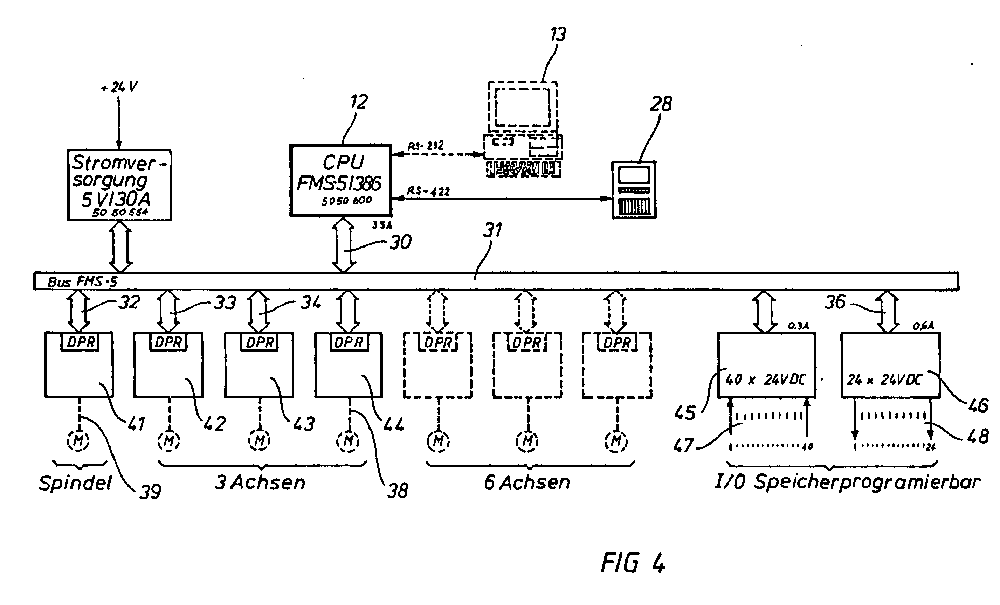

Anhand der Figuren 3 und 4 wird nun gezeigt, wie das einfache Prinzip der Figur 2 auf die Steuerung mehrerer unabhängig voneinander arbeitender Achsen angewendet wird.

Mit Bezugziffer 12 ist eine Zentraleinheit einer Werkzeugmaschine nach der vorliegenden Erfindung dargestellt, die im einfachsten Fall aus einem Transputer oder einem Risc-Prozessor besteht. Damit besteht der Vorteil, daß nur geringe Hardwarekosten anfallen, weil es sich hier um ein relativ einfaches Gerät handelt. Dieses Gerät wird von der externen Programmier-Einheit 13 über eine Verbindungsleitung 27 programmiert. Anstatt einer direkten Übertragung von der Programmier-Einheit 13 über die Leitung 27 ist es ebenso möglich, digitale Daten, die von der Programmier-Einheit errechnet wurden, über eine entsprechende Eingabeeinheit der Zentraleinheit 12 einzugeben. Hier genügt es dann, eine entsprechende Einleseeinheit an der Werkzeugmaschine vorzusehen.

Über eine weitere Leitung 29 ist es möglich, auf den Programmzustand der Zentraleinheit 12 über die Konsole 28 Einfluß zu nehmen und entsprechende Änderungen vorzunehmen. Diese kann erfindungsgemäß sehr einfach aufgebaut und kann z. B. nur aus digitalen Anzeigen (Leuchtdioden oder dgl.) bestehen, um den Programmierzustand der Zentraleinheit 12 zur Anzeige zu bringen. Man verzichtet also absichtlich auf aufwendige Bildschirme mit entsprechender Software und Hardwareaufwand und verwendet nur eine einfache Konsole 28.

In der Zentraleinheit 12 nach Figur 3 sind also die vorher erwähnten Tabellen (Objektprogramme 24) pro Achssteuerung gespeichert, so daß jeder Werkzeugachse in einer bestimmten Zeiteinheit ein Vorschub oder dergleichen zugeordnet wird.

Wichtig ist, daß als Speicher der Zentraleinheit 12 ein einfaches RAM erforderlich ist, welches nicht in einer höheren Programmiersprache mit einem entsprechenden Interpreter arbeitet, sondern in dem direkt die digitalen Daten über die vorher erwähnte Leitung 27 eingespeichert werden.

Über die Mehrbitleitung 30 arbeitet die Zentraleinheit 12 auf den Bus 31, über den die Daten übertragen werden. An diesem Bus 31 sind eine Reihe von Achsmodulen über entsprechende Leitungen 32,33,34-36 angeschlossen. Hierbei ist wesentlich, daß z. B. über das Achsmodul 37 eine Reihe von Achsen über die Ausgänge 38 angesteuert werden können, wobei zu der Achsenansteuerung auch zusätzlich eine getrennte Spindelansteuerung gehören kann.

Hier werden also die Sollwerte den Achsen vorgegeben und die Rückmeldung von den entsprechend angesteuerten Achsen erfolgt über die entsprechenden Eingangseinheiten 39 über deren Eingänge 40, die istwerte dem Steuerbus 31 über die Leitung 32 mitgeteilt werden. Diese Istwerte werden wieder über die Leitung 30 der Zentraleinheit 12 zugeführt und in Abhängigkeit von einer eventuellen Abweichung zwischen dem ist-und Sollwert wird nun wiederum über die Leitung 30, den Bus 31 und die Leitung 34 das Achsmodul 37 angesteuert, um eine weitere Ansteuerung der Achsen am Ausgang 38 zu gewährleisten.

Neben der hier beschriebenen Ausführungsform gibt es noch eine weitere Ausführungsform, die in der Figur 4 dargestellt ist.

Kennzeichnend für diese Ausführungsform ist, daß zwar in der Zentraleinheit 12 ein Speicherbereich angeordnet ist, aber die vorher beschriebenen Tabellen pro Achse oder Spindel in den Baugruppen 41-44 eingespeichert werden. Die Baugruppen 41-44, die am Bus 31 hängen, beeinhalten also die Tabellen. Bei den Baugruppen 41-44 ist also zusätzliche Intelligenz vorhanden, nachdem die Steuertabellen eingespeichert sind.

Damit besteht der Vorteil, daß ein geringerer Datenaustausch über die Leitungen 30, den Bus 31 und die entsprechenden Leitungen 32-36 erforderlich ist, weil die Karten mit ihrer zugeordneten Intelligenz diesen Datenaustausch vermindern.

Hierbei weisen also gemäß Figur 4 diese Baugruppen 41-44 eine eigenständige Intelligenz auf, und die Tabelle wird also beim Laden des Programms in die Werkzeugmaschine den einzelnen Baugruppen 41-44 mitgeteilt.

Wichtig ist bei den Ausführungen nach Figur 3 und 4, daß auf den Datenbus 31 noch speicherprogrammierbare Steuerungen über die numerischen Ein- und Ausgänge 45,46 zugreifen, die erforderlich sind, um allgemeine Maschinenfunktionen zu steuem, wie z. B. Kühlwasser-Einschaltung und -Ausschaltung, Kühlwasserdurchfluß, das Ansteuern von Spannwerkzeugen und dergleichen mehr. Über die Baugruppe 45 sind numerische Eingänge 47 programmierbar. Wenn z. B. in der Sicherheitsüberwachung der Werkzeugmaschine eine Tür während des Betriebes geöffnet wird, soll die Maschine stillgesetzt werden.

Andererseits sind in der Baugruppe 46 numerische Ausgänge 48 vorhanden, die die vorher erwähnten Funktionen des Kühlwassers, der Spannwerkzeuge und dergleichen Elemente an der Werkzeugmaschine steuern. Die Baugruppen 45 und 46 machen nur eine Umwandlung 5VDC/24VDC und legen respektive nehmen die Daten auf dem Bus 31 für die Zentraleinheit 12.

In einer Weiterbildung der vorliegenden Erfindung ist vorgesehen, daß in der Zentraleinheit 12 noch eine speicherprogrammierbare Steuerung enthalten ist, die als PLC-Manager den Betriebsablauf der Maschine insgesamt überwacht und steuert.

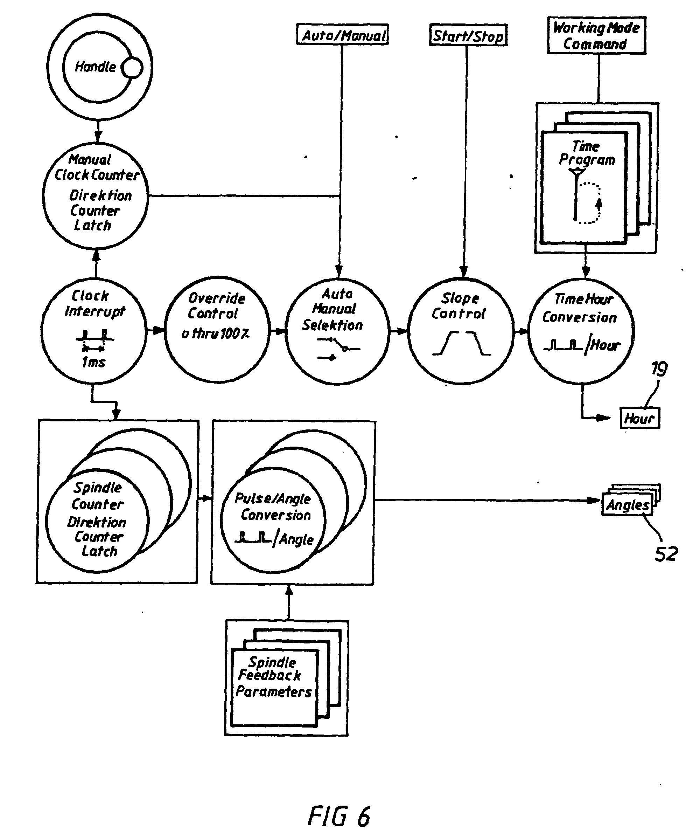

Gemäß Figur 6 ist wichtig, daß das Clocksignal (Maschinentakt) nicht nur automatisch erzeugt wird, sondern dieser Maschinentakt kann über ein Handrad entsprechend modifiziert werden. Damit ist es möglich, die Maschine von Hand schneller oder langsamer oder auch vorwärts oder rückwärts zu betreiben.

Zusammenfassend kann also festgestellt werden, daß der wesentliche Vorteil der vorliegenden Erfindung darin besteht, daß man eine durch eine Kurvenscheibe gesteuerte Werkzeugmaschine hat, die außerordentlich produktiv ist, daß diese Kurvenscheibe aber nur softwaremäßig vorgegeben ist und nicht als Hardwareteil (abtastbares Steuerteil) vorhanden ist. Damit besteht der Vorteil, daß man die Produktionsgeschwindigkeit und die Genauigkeit einer kurvengesteuerten Werkzeugmaschine erhält und trotzdem aufgrund der Flexibilität jede beliebige "Kurvenscheibe" softwaremäßig erzeugen kann und daher eine softwaremäßig emultierte oder imitierte kurvenscheibengesteuerte Werkzeugmaschine erhält.

Der Kem der vorliegenden Erfindung liegt also darin, daß eine kurvenscheibengesteuerte Werkzeugmaschine mit dem beschriebenen Verfahren simuliert wird.

In Figur 6 ist erläutert, daß der Zeittakt der Uhr 19 nicht nur manuell durch ein entsprechendes Handrad verändert werden kann, sondern darüber hinaus noch von einem internen Clocksignal.

Im Automatikmod läuft die Uhr 19 in Abhängigkeit von einem Frequenz-Generator, der durch den Override-Schalter von 0 bis 100% variierbar ist.

Im Handbetrieb wird die Uhr 19 von der Verdrehung eines Handrades beeinflusst, wobei mit diesem Handrad auch die Drehrichtung berücksichtigt wird. Die Zeit kann also "vorwärts und rückwärts" ablaufen, wie dies durch den Auf- und Abwärtszähler 20 in Figur 2 dargestellt ist.

Jede Änderung des Zeittaktes wird durch einen Impulsformer kontrolliert, in einen entsprechenden Umwandler eingegeben, der dann daraus den zentralen Uhrtakt der Uhr 19 erzeugt.

In analoger Weise werden die Meßsignale der Spindeln, die in Winkelgraden ausgedrückt werden, als Funktion der Bewegung der jeweiligen Spindel in absolute Winkelpositionen umgerechnet und es wird hieraus ein zentraler Winkeltakt 52 gebildet.

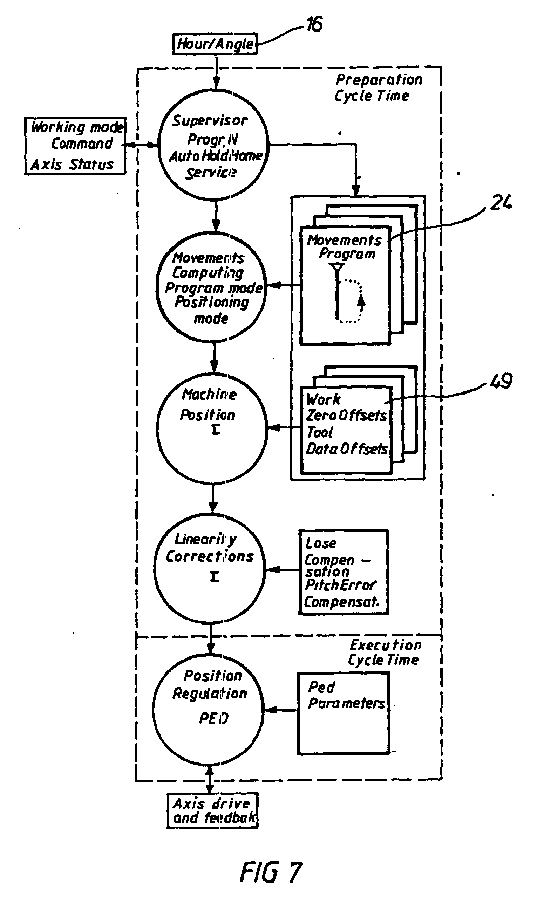

Anhand der Figur 7 wird nun die Erzeugung eines Achssteuerbefehls zur Ansteuerung eine der Baugruppen 37-39 bzw. 41-44 näher erläutert.

Eine Überwachungseinheit überwacht zunächst den Betriebszustand und gibt den weiteren Weg nur dann frei, wenn die Programmschaltung ein Achssteuerkommando vorsieht.

Das nach dem vorher beschriebenen Verfahren berechnete Objektprogramm 24 wird einer Wegeberechnung unterworfen, die als Ergebnis die zu erreichende Maschinenposition ausgibt.

Bei der Berechnung der zu erreichenden Maschinenposition werden noch Festwerte berücksichtigt, wie z.B. Null-Lagenverschiebungen, Werkzeugverschiebungen und dgl.

Als Ergebnis dieser Berechnung wird ein Korrektur-Signal errechnet, bei dessen Berechnung noch Schleppfehler und Anlaufstörungen einbezogen werden.

Es wird hieraus ein Positions-Steuersignal für einen Regler (PED) erzeugt, der seinerseits von Festwerten beeinflusst wird.

Das Ausgangssignal dieses PED-Reglers steuert dann die Achse an und empfängt von der Achse die entsprechenden lstwert-Rückmeldungen.

Das Symbol "Maschinenposition" berechnet die nächste, anstehende und geforderte Maschinenposition, darüberhinaus Addition der nächsten Bewegung zur aktuellen Maschinenposition, ferner Addition der Nullpunkt-Versatzes und im übrigen Addition der Werkzeuglängenkorrektur.

Der Funktionsblock (Linear-Korrektur) führt die Kompensation der mechanischen Fehler der Achse aus, ferner eine Kompensation des Spiels und eine Kompensation der Linearität.

Anhand der Figur 8 wird erläutert, wie das in Figur 2 erläuterte Objektprogramm im Zusammenspiel zwischen der Programmiereinheit 13 und dem Zentralrechner 12 errechnet wird.

Die Achsbewegungen der einzelnen Maschinenteile werden in einem Werkstückprogramm im ISO-Code definiert. Diese Werkstückprogramme sind als Teilprogramme 51 für jede Achse und Spindel-Gruppe getrennt als Software-Programm vorhanden.

Alle Teilprogramme 51 werden von einem Compiler 14 erarbeitet, der bei der Verarbeitung noch Festwerte aus einem Festwertspeicher 49 bezüglich bestimmter Maschinenfunktionen und andere Festwerte aus einem Festwertspeicher 50 bezüglich bestimmter Achsenparameter holt.

Der Compiler verarbeitet die oben genannten Teilprogramme 51 in Verbindung mit den Werten aus den Festwertspeichern 49,50 und berechnet den Verlauf der Bahngeschwindigkeit-Zeit für jede Achse getrennt und schreibt die Werte in ein Objektfile 15-18, wobei das Objektfile 15 z. B. der Achse 1, das Objektfile 16 der Achse 2, das Objektfile 17 der Achse 3 und so weiter zugeordnet ist.

Im Ausführungsbeispiel nach Figur 8 hat der Compiler 14 drei Werkstückprogramme 51a-c zu verarbeiten, welche die Programmierung einer Maschine mit sechs Achsen ausführen. Zur Berechnung der Bahn jeder Achse liest der Compiler das erste Werkstückprogramm 51a, bis er auf einen Ablaufkontrollpunkt trifft (in dem Beispiel trifft er auf eine Synchronisation zwischen den Werkstückprogrammen 51a, 51b, 51c).

Er berechnet die Geschwindigkeitswerte in Funktion der Zeit für die zwei programmierten Achsen und schreibt diese Werte in das Objektfile 15,16 der Achsen 1 und 2. Man erkennt, daß das erste Achsenkommando dieser Sequenz zur Zeit HO ausgeführt und das letzte zur Zeit H1a beendet sein wird.

Dasselbe geschieht für das zweite Werkstückprogramm 51 b mit den Achsen 3 und 4. Das erste Achsenkommando dieser Sequenz wird zur Zeit HO ausgeführt und das letzte wird zu der Zeit H1b beendet sein.

Dasselbe geschieht für das dritte Werkstückprogramm 51 c mit den Achsen 5 und 6. Das erste Achsenkommando dieser Sequenz wird zur Zeit HO ausgeführt, und das letzte wird zur Zeit H1c beendet sein.

Nachdem alle Werkstückprogramme 51a-c bis zum ersten Synchronisationspunkt interpretiert sind, muß für die Achsen, die nicht die längste Bewegungsdauer haben, eine Wartezeit eingefügt werden.

Im Beispiel ist H1b die größte Zeit. Die Achsen 1,2,5 und 6 erhalten also ein Kommando mit Geschwindigkeit Null bis zur Zeit H1b.

Der Inperpolator arbeitet das Werkstückprogramm bis zum nächsten Ablaufkontrollpunkt weiter ab (in unserem Beispiel eine Synchronisation zwischen den Programmen 1 und 2). Er berechnet die Geschwindigkeitswerte in Funktion der Zeit für die 2 programmierten Achsen und schreibt diese Werte anschließend an die vorhandenen Daten in das Objektfile der Achsen 1 und 2. Das letzte Kommando dieser Achsen ist zur Zeit H2a beendet.

Dasselbe geschieht für das 2. Werkstückprogramm mit den Achsen 3 und 4. Das letzte Achsenkommando wird zur Zeit H2b beendet sein.

Programmieren einer Wartezeit für die Achsen 3 und 4 durch Einfügen eines Kommandos mit Geschwindigkeit Null bis zur Zeit H2a.

Weiterbearbeiten des Werkstückprogramms bis zum nächsten Ablaufkontrollpunkt (in unserem Beispiel nach dem Programmsprung eine Synchronisation zwischen den Programmen 1, 2 und 3). Berechnen der Geschwindigkeitswerte in Funktion der Zeit für die 3 Programme mit den 6 programmierten Achsen und Schreiben der Werte anschließend an die vorhandenen Daten in die Objektfiles der Achsen. Das letzte Kommando dieser Achsen ist zur Zeit H3c beendet.

Da das Werkstückprogramm eine Schleife enthält, wird - wenn möglichdieselbe Abarbeitung produziert. Die Verzweigungen werden durch die Uhr kontrolliert, die in unserem Beispiel von der Zeit H3c zur Zeit H1c umgeschaltet wird.
Der Objektcode muß jedoch noch Wartezeiten von unterschiedlicher Zeit enthalten. Deshalb müssen die Programme der Achsen 1,2,3 und 4 eine Wartezeit zwischen der Zeit H3a resp. H3b und der Zeit H3c enthalten.

Definition der Kommandos für eine Bewegung.

Die Kommandos für eine Bewegung sind in der Form von Segmenten mit konstanter Geschwindigkeit definiert. Jedes Segment enthält die Startzeit, den Geschwindigkeitswert und die Zeitdauer.

Diese Form der Definition der Bewegung wurde einerseits aus Gründen der Genauigkeit gewählt und andererseits, um die Anzahl der Blöcke, die das Objekt-programm bilden, zu reduzieren.

Neben Einschwingvorgängen und nichtlinearen Interpolationen hat eine Achse immer eine konstante Geschwindigkeit, daher das Interesse, die Bewegung in dieser Form zu definieren.

Das Abtasten der Geschwindigkeitswerte kann auch auf verschiedene Arten realisiert werden. Die Auflösung, die das System garantiert, veranlasst eine Abtastung vorzusehen, die auf der Positionsänderung basiert; das einzige Mittel, um eine genügende Auflösung für die Wiedergabe schneller Bewegungen bei sehr niedrigen Geschwindigkeiten sicherzustellen.

Die Anzahl der Blöcke jedoch, die durch eine solche Methode generiert wird, ist abhängig von der zu durchfahrenden Distanz. Da die größten Distanzen meistens im Schnellgang zu durchfahren sind, würde der größte Teil des Programms aus Blöcken die diese Eilgangbewegungen definieren würden und für welche eine hohe Auflösung nicht notwendig ist.

Als Konsequenz wird die durch den Compiler vorgegebene Bahn in der Form von Inkrementen pro Zeiteinheit und demzufolge mit konstanter Geschwindigkeit abgespeichert. Diese konstanten Positionsänderungen pro Zeiteinheit werden in einem einzigen Block mit Angabe der Anzahl der Wiederholungen abgespeichert.

Diese Art der Abspeicherung enthält einen Nachteil. Die Einschwingvorgänge (Beschleunigung, Verzögerung) sind die Teile einer Bahn, welche die größte Anzahl von Blöcken benötigen, und diese Blöcke wiederholen sich.

Um zu verhindern, daß das Objekt-Programm mit unpraktisch vielen redundanten Informationen gefüllt wird, wird jeder E inschwingvorgang ein einziges Mal abgespeichert, und die Achsensteuerung holt diesen Wert aus einer Tabelle für jeden Typ eines Einschwingvorganges und verarbeitet diesen weiter.

Zusammenfassend kann also festgestellt werden, daß die hier vorgeschlagene Maschinensteuerung die Charakteristik und die Vorteile der vorher erwähnten mechanischen Maschinen mit Kurvensteuerungen hat. Damit ergeben sich relativ kostengünstige Maschinen, mit denen schnelle Bearbeitungsvorgänge vorgenommen werden können. Im Gegensatz zu den herkömmlichen NC-Steuerungen berechnet die Steuerung nach der Erfindung keine Wegebahnen von Achsen, Hilfs- sowie Kontrollfunktionen des Programms in Echtzeit. Es werden vielmehr die notwendigen Achsen und Spindelsteuerungen vor der Bearbeitung des Werkstückes errechnet und während der Bearbeitung des Werkstückes werden diese tabellenartig errechneten Objektfiles 15-18 unter einem zentralen Uhrtakt der Uhr 19 abgearbeitet. Ebenso werden die Hilfs- und Kontrollfunktionen unter dem gleichen Uhrtakt von einer speicherprogrammierbaren Steuerung abgearbeitet.

Damit ist eine schnelle Ausführung von Bewegungssteuerungen möglich, wobei entsprechend der Schaltung der Uhr die Bewegungsrichtungen auch umgekehrt werden können, ohne daß eine erneute Berechnung aller Funktionen (Objektfiles) notwendig ist. Die Synchronisation der verschiedenen Achsen und Spindeln wird durch den zentralen Zeittakt der Uhr 19 durchgeführt. Dadurch ergibt sich im übrigen der Vorteil, daß nur eine minimal ausgestattete Bediener-Schnittstelle vorhanden sein muß, deren Einfachheit der einer herkömmlichen mechanischen Kurvenscheiben-Maschine entspricht. Es gibt demzufolge nur Knöpfe für Start/Stop der Spindeln, Start/Stop des Programms, sowie eine Kurbel für die Ablaufkontrolle des Programms. Für die Justierung kann der Bediener die Position jeder Achse mit Hilfe einer (elektronisch simulierten) Mikrometerschraube (Werkzeug-Offsed) verstellen.

Darüberhinaus kann die Bediener-Schnittstelle noch Diagnose-Funktionen beinhalten.

Damit ergibt sich insgesamt der Vorteil, daß der Zentralrechner 12 über eine Kommunikations-Schnittstelle auf ein Netz arbeiten kann, an dem eine Anzahl von erfindungsgemässen Werkzeugmaschinen-Steuerungen angeschlossen sind.

### ZEICHNUNGS-LEGENDE

- 1: Programmier-Einheit
- 2: Steuer-Einheit
- 3: Zeittakt
- 4: Achssteuerung 1,2 -n
- 5: Maschinenlogik
- 6: Bus für Kommandos
- 7: Bus für Takt
- 8: Ausgang für Achssteuerung
- 9: Eingang für Rückmeldung der Achsposition
- 10: Ausgangsbus
- 11: Eingangsbus
- 12: Zentraleinheit
- 13: Programmier-Einheit
- 14: Compiler
- 15: Objektfile
- 16: Objektfile
- 17: Obiektfile
- 18: Objektfile
- 19: Uhr
- 20: Auf- und Abwärtszähler
- 21: Positionskontrolle
- 22: Maschinenposition
- 23: Istwert-Erfassung
- 24: Objektprogramm a-c
- 25: Programmposition
- 26: Regler
- 27: Verbindungsleitung
- 28: Konsole
- 29: Leitung
- 30: Mehrbitleitung
- 31: Bus
- 32: Leitung
- 33: Leitung
- 34: Leitung
- 35: Leitung
- 36: Leitung
- 37: Sollwert-Ausgangseinheit
- 38: Sollwert-Ausgänge
- 39: Istposition-Eingangseinheit
- 40: Istposition-Eingänge
- 41: Achsmodul
- 42: Achsmodul
- 43: Achsmodul
- 44: Achsmodul
- 45: Baugruppe (Eingänge)
- 46: Baugruppe (Ausgänge)
- 47: Eingänge
- 48: Ausgänge
- 49: Festwert-Speicher
- 50: Festwert-Speicher
- 51: Werkstückprogramm a-c
- 52: Winkeltakt

## Patentansprüche

1. Verfahren zum Betrieb einer numerisch gesteuerten Werkzeugmaschine zur Bearbeitung von Werkstücken mit mehreren unabhängig voneinander zu berechnenden Achsen- und Spindelbewegungen zur Steuerung der Werkzeuge, sowie mit weiteren den Betrieb der Werkzeugmaschine steuemden Betriebs-, Hilfs- und Kontrollbefehlen, wobei die für alle Achsensteuerungen (4) zu berechnenden Wegbahnen schon vor der Bearbeitung des Werkstücks von einer externen Programmier-Einheit (1,13) berechnet werden, **dadurch gekennzeichnet,** daß von einem Compiler (14) in jeweils einer Zuordnungstabelle in Form eines Objektfiles (15-18) der berechnete Verlauf der Bahngeschwindigkeit-Zeit für jede Achse getrennt in beliebiger digitaler Form in die Werkzeugmaschine eingespeichert wird, und daß zur Steuerung der Achsen bzw. Spindeln die Objektfiles (15-18) synchron bei Bearbeitung des Werkstücks unter Taktung durch eine zentrale Uhr (19) in beliebiger Geschwindigkeit vorwärts oder rückwärts ablaufen, wobei der Zeittakt der zentralen Uhr (19) im Automatikmodus in Abhängigkeit von einem Frequenzgenerator abläuft, der manuell in einem Bereich von 0-100% variabel einstellbar ist und daß in einem Handbetrieb die zentrale Uhr (19) aufwärtsoder abwärts zur Umkehr der Drehrichtung der Achssteuerung (4) zählt.

2. Verfahren nach Anspruch 1, **dadurch gekennzeichnet**, daß die zur Herstellung des Werkstückes notwendigen Betriebs-, Hilfs- und Kontrollbefehle zum Befehlen und Überwachen der Maschinenfunktionen von einer speicherprogrammierbaren Steuerung ausgeführt werden, die ebenfalls von der zentralen Uhr (19) getaktet ist.

3. Verfahren nach Anspruch 1 oder 2, **dadurch gekennzeichnet,** daß die Achsbewegungen (Objektfiles 24a-c) in Abhängigkeit von Festwerten (Festwertspeicher 49,50) berechnet werden und einen Einschwingvorgang pro Achse, Geschwindigkeit und Beschleunigungswerte beinhalten und als Segmente abgespeichert werden, denen jeweils eine konstante Bearbeitungsgeschwindigkeit zugeordnet ist und daß jedes Segment einen Wert für die Geschwindigkeit, Startzeit und Dauer der Bewegung enthält.

4. Werkzeugmaschine zur Bearbeitung von Werkstücken mit mehreren unabhängig voneinander zu berechnenden Achsen- und Spindelbewegungen zur Steuerung der Werkzeuge, sowie mit weiteren den Betrieb der Werkzeugmaschine steuernden Betriebs-, Hilfs-, und Kontrollbefehlen, zur Ausführung des Verfahrens nach Anspruch 1, **dadurch gekennzeichnet,** daß
- die Werkzeugmaschine eine Zentraleinheit (12), einen Compiler (14) und eine manuell einstellbare zentrale Uhr (19) enthält, wobei
- der Compiler (14) Zuordnungstabellen, in Form von Objektfiles (15-18), von durch eine extemo Programmier-Einheit (1,13) berechneten Wegbahnen, in die Werkzeugmaschine einspeichert und
- die Zentraleinheit (12), die für jede zu steuernde Achse und Spindel als Funktion der Zeit abgespeicherten Objektfiles (15-18) unter dem Takt der zentralen Uhr (19) abarbeitet.

5. Werkzeugmaschine nach Anspruch 4, **dadurch gekennzeichnet,** daß zum Antrieb eines Werkzeuges Spindeln mit Lageregelung verwendet werden.

## Claims

1. A method for the operation of a numerically controlled machine tool for the processing of workpieces with several axle- and spindle movements to be calculated independently of each other, to control the tools, and also with further operating, auxiliary and control commands controlling the operation of the machine tool, wherein the travel paths to be calculated for all axle controls (4) are already calculated before the processing of the workpiece by an external programming unit (1, 13), **characterised in that** the calculated pattern of the path speed time is stored in any desired digital form in the machine tool separately for each axle by a compiler (14) in an allocation table in each case in the form of an object file (15-18), and that to control the axles or spindles, the object files (15-18) run forwards or backwards in synchronism at a desired speed during the processing of the workpiece, with timing by a central clock (19), the time cycle of the central clock (19) in automatic mode running as a function of a frequency generator, which is adjustable manually so as to be variable in a range of 0-100% and the central clock (19) counting upwards or downwards in a manual operation for the reversal of the direction of rotation of the axle control arrangement (4).

2. A method according to claim 1, **characterised in that** the operating, auxiliary and control commands necessary for the manufacture of the workpiece, to command and monitor the machine functions, are performed by a memory-programmable control arrangement, which is likewise timed by the central clock (19).

3. A method according to claim 1 or claim 2, **characterised in that** the axle movements (object files 24a-c) are calculated as a function of fixed values (fixed value memory 49, 50) and contain one transient process per axle, speed and acceleration values and are stored as segments with which in each case a constant processing speed is associated and that each segment contains a value for the speed, start time and duration of the movement.

4. A machine tool for the processing of workpieces with several axle- and spindle movements, to be calculated independently of each other, to control the tools, and also with further operating, auxiliary and control commands controlling the operation of the machine tool, to carry out the method according to claim 1, **characterised in that**
the machine tool contains a central unit (12), a compiler (14) and a manually controllable central clock (19), in which the compiler (14) stores allocation tables, in the form of object files (15-18), of travel paths calculated by an external programming unit (1, 13), into the machine tool and
the central unit (12) processes under the cycle of the central clock (19) the object files (15-18) stored as a function of time for each axle and spindle to be controlled.

5. A machine tool according to claim 4, **characterised in that** spindles with position regulation are used to drive a tool.

## Revendications

1. Procédé pour exploiter une machine-outil à commande numérique destinée à usiner des pièces avec plusieurs mouvements d'axes et de broches à calculer indépendamment les uns des autres, pour la commande des outils, et avec d'autres instructions d'exploitation, d'assistance et de contrôle commandant l'exploitation de la machine-outil, les trajectoires à calculer pour toutes les commandes d'axes (4) étant calculées par une unité de programmation externe (1, 13) avant même l'usinage de la pièce, **caractérisé en ce que** la courbe calculée de la vitesse sur la trajectoire-temps est mise en mémoire dans la machine-outil par un compilateur (14), séparément pour chaque axe et sous une forme numérique quelconque, en un tableau d'affectation qui se présente sous la forme d'un fichier objet (15-18), **et en ce que** pour la commande des axes et des broches, les fichiers objets (15-18) se déroulent en avant ou en arrière de façon synchrone lors de l'usinage de la pièce, à n'importe quelle vitesse, en étant synchronisés par une horloge centrale (19), étant précisé qu'en mode automatique, la cadence de l'horloge centrale (19) se déroule en fonction d'un générateur de fréquence qui est réglable manuellement de façon variable dans une plage de 0 à 100 %, et qu'en mode manuel, l'horloge centrale (19) effectue un comptage progressif ou régressif pour inverser le sens de rotation de la commande d'axe (4).

2. Procédé selon la revendication 1, **caractérisé en ce que** les instructions d'exploitation, d'assistance et de contrôle destinées à commander et surveiller les fonctions de la machine et nécessaires pour la fabrication de la pièce sont exécutées par une commande programmable par mémoire qui est également synchronisée par l'horloge centrale (19).

3. Procédé selon la revendication 1 ou 2, **caractérisé en ce que** les mouvements des axes (fichiers objets 24a-c) sont calculés en fonction de valeurs fixes (mémoires de valeurs fixes 49, 50), contiennent un régime transitoire pour chaque axe, chaque vitesse et chaque valeur d'accélération, et sont mis en mémoire sous la forme de segments auxquels sont attribuées des vitesses d'usinage constantes respectives, **et en ce que** chaque segment contient une valeur pour la vitesse, le temps de démarrage et la durée du mouvement.

4. Machine-outil pour usiner des pièces avec plusieurs mouvements d'axes et de broches à calculer indépendamment les uns des autres, pour la commande des outils, et avec d'autres instructions d'exploitation, d'assistance et de contrôle commandant l'exploitation de la machine-outil, pour la mise en oeuvre du procédé selon la revendication 1, **caractérisée en ce que**
- la machine-outil contient une unité centrale (12), un compilateur (14) et une horloge centrale (19), étant précisé que
- le compilateur (14) met en mémoire dans la machine-outil des tableaux d'affectation, sous la forme de fichiers objets (15-18), de trajectoires calculées par une unité de programmation externe (1, 13), tandis que
- l'unité centrale (12) traite à la cadence de l'horloge centrale (19) les fichiers objets (15-18) mis en mémoire en fonction du temps pour chaque axe et chaque broche à commander.

5. Machine-outil selon la revendication 4, **caractérisée en ce qu'**on utilise pour entraîner un outil des broches à régulation de position.
